(19) **Europäisches Patentamt**

**European Patent Office**

**Office européen des brevets**

(11) **EP 1 266 918 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **C08G 18/48**

(21) Anmeldenummer: **02010786.8**

(22) Anmeldetag: **15.05.2002**

(54) **Verfahren zur Herstellung von hochelastischen Polyurethanschaumstoffen**

Process for manufacturing of highly elastic Polyurethane foams

Procédé de fabrication de mousses polyurethanes à grande élasticité

(84) Benannte Vertragsstaaten:
**AT BE CH CY DE DK ES FI FR GB GR IE IT LI LU MC NL PT SE TR**

(30) Priorität: **15.06.2001 DE 10129062**

(43) Veröffentlichungstag der Anmeldung:
**18.12.2002 Patentblatt 2002/51**

(73) Patentinhaber: **BASF AKTIENGESELLSCHAFT**
**67056 Ludwigshafen (DE)**

(72) Erfinder:
• **Arlt, Andreas**
**49457 Drebber (DE)**
• **Wagner, Klaus**
**49419 Wagenfeld (DE)**
• **Varenkamp, Volker**
**49448 Stemshorn (DE)**

(56) Entgegenhaltungen:
**EP-A- 0 731 120      EP-A- 0 778 301**
**EP-A- 0 884 338**

**Beschreibung**

Gegenstand der Erfindung ist ein Verfahren zur Herstellung von hochelastischen Polyurethanschaumstoffen.

Hochelastische Polyurethanschaumstoffe, häufig auch als HR-Schaumstoffe bezeichnet, sind seit langem bekannt. Sie werden zumeist durch Umsetzung füllstoffhaltiger Polyole mit Isocyanaten, insbesondere TDI, MDI oder deren Mischungen, hergestellt, wobei auch modifizierte Isocyanate, insbesondere urethan-, harnstoff-, biuret- und/oder allophanatgruppenhaltige Isocyanate eingesetzt werden können. Als füllstoffhaltige Polyole kommen beispielsweise zum Einsatz:

a) Dispersionen von Homo- und/oder Copolymeren von Styrol und Acrylnitril in Polyolen, die mit Acrylnitril und/oder Styrol gepfropft sind (SAN-Polyole).

b) Dispersionen von Polyharnstoffteilchen in Polyolen, wobei die Herstellung der Polyharnstoffteilchen durch Umsetzung von Diaminen und Diisocyanaten in Gegenwart des Polyols erfolgt (PHD-Polyole).

c) Dispersionen von Teilchen, welche durch Umsetzung von Alkanolaminen und Diisocyanaten in Polyolen hergestellt werden (PIPA-Polyole) oder

Mischungen aus mindestens zwei der genannten Polyetheralkohole.

Neben diesen füllstoffhaltigen Polyolen werden zur Herstellung von HR-Schaumstoffen zumeist auch Alkanolamine als Vernetzer eingesetzt. Die Alkanolamine bewirken eine chemische Vernetzung des Schaumstoffes und werden benötigt, um Schaumstoffe mit ausreichender Stabilität zu erhalten. Werden keine Alkanolamine eingesetzt, kommt es in der Regel zum Kollaps oder starken Absetzen des Schaumstoffes, da die Zellen nach Beendigung der Polyisocyanat-Polyadditions-Reaktion nicht genügend stabilisiert sind. Die physikalische Stabilisierung bei HR-Schaumstoffen ist im Gegensatz zu konventionellen Schaumstoffen zu diesem Zeitpunkt nicht ausreichend, da für die Herstellung von HR-Schaumstoffen spezielle Silikonstabilisatoren mit vergleichsweise geringer Aktivität eingesetzt werden. Werden andererseits aktivere Stabilisatoren, wie sie zur Herstellung von konventionellen Blockschaumstoffen verwendet werden, eingesetzt, so neigen die HR-Schaumstoffe aufgrund der insgesamt höheren Vernetzungsdichte zur Bildung geschlossenzelliger Schaumstoffe, was zum sogenannten "Schrumpfen" der Schaumstoffe in der Abkühlphase führt.

Mit der Verwendung der Alkanolaminvernetzer gehen jedoch auch einige Änderungen der mechanischen Eigenschaften der Schaumstoffe und dadurch auch Nachteile einher, so daß deren Gehalt im Schaumsystem nach Möglichkeit begrenzt werden muß.

So ist aus der Literatur bekannt, daß der Zusatz von Alkanolaminen, beispielsweise Diethanolamin, zu einer Erhöhung der Vernetzungsdichte des Schaumstoffs führt, da die Diethanolaminmoleküle kovalent in die Hartphasensegmente der Schaummatrix eingebunden werden. Dies wird beispielsweise in Dimitros, Wilkes: Journal of Applied Polymer Science 2000, 77, 202-216 und Dounis, Wilkes: Journal of Applied Polymer Science 1997, 65, 525- 539 beschrieben.

Der Einbau der Diethanolaminmoleküle in die Hartsegmente führt zu einer Störung der Hartphasenordnung, indem der Anteil an zwischenmolekularen Wasserstoffbrückenbindungen zwischen den Harnstoffeinheiten in den Hartsegmenten herabgesetzt wird. Diese Wasserstoffbrücken sind jedoch die Voraussetzung für das Auftreten von kristallinen Strukturen, die dem Schaumstoff seine typische Härte geben. Da der Anteil an Wasserstoffbrücken und damit der Anteil der kristallinen Einheiten in den Hartsegmenten herabgesetzt wird, tritt in herkömmlichen HR-Schaumstoffen durch den Zusatz von Alkanolaminvernetzern eine Verringerung der Härte der Schaumstoffe auf. Die Störung der Hartsegmente im HR-Schaum hat jedoch auch Vorteile. Bei der Deformation der Schaumstoffe durch Krafteinwirkung werden die Wasserstoffbrücken bei einer bestimmten Kraft gelöst. Bei der anschließenden Entlastung müssen sich die Wasserstoffbrückenbindungen wieder ausbilden. Diese Erholungsphase dauert umso länger je größer und ungestörter die Hartphasensegmente sind. Dadurch wird die Fläche zwischen Be- und Entlastungskurve, die sogenannte "Hysterese" größer, was sich in einer geringeren Elastizität äußert. Diethanolamin stört die Ausbildung von längeren und geordneten Hartsegmenten, so dass sich weniger Wasserstoffbrücken ausbilden können. Die Erholungsphase und die Hysterese werden dadurch kleiner.

Des weiteren ist bekannt, dass mit zunehmender Härte die Elastizität von HR-Schaumstoffen zunimmt. Prinzipiell ist die Härtereduktion in vielen Fällen unerwünscht. Hochelastische Schaumstoffe werden in der Regel eher hart eingestellt, um den hohen Anforderungen an die Komforteigenschaften, beispielsweise hoher Elastizität, gerecht zu werden. Ein Kriterium, welches die Schaumstoffe erfüllen sollten, ist der sogenannte SAG-Faktor, der Quotient der Eindruckhärte bei 65 % Verformung und der Eindruckhärte bei 25 % Verformung (Verfahren B). Der SAG-Faktor sollte einen Wert >2,5, bevorzugt > 3 aufweisen. Weiterhin führt die Störung der Hartphasenordnung und damit der zwischenmolekularen Wasserstoffbrücken durch Alkanolaminvernetzer auch zu einer geringeren Beständigkeit der Schaumstoffe gegenüber der Einwirkung von Wärme und Feuchtigkeit, da die Domänen labiler und damit beweglicher sind. Die Alkanolaminvernetzer werden über Urethan- und Harnstoffgruppen in die Polyharnstoff-Hartsegmente eingebaut. Diese zusätzlichen Urethan- und Harnstoffgruppen in den Hartsegmenten erlauben die Ausbildung von Wasserstoffbrückenbindungen zu eindringenden Wassermolekülen, während dies in Hartsegmenten ohne Alkanolamin nicht möglich ist, da hier die Harnstoffbindungen untereinander zu kristallinen Hartsegmenten über Wasserstoffbrücken in Wechselwirkung stehen, so dass keine zusätzlichen Wasserstoffbrücken zu Wassermolekülen ausgebildet werden können. Der negative Effekt des eingedrungenen Wassers in den Hartsegmenten äußert sich beispielsweise in der deutlichen Verschlechterung der mechanischen Eigenschaften unter bzw. nach der Einwirkung von Feuchtigkeit. Insbesondere der sogenannte "wet compression set" (WCS), eine Druckverformungsrestmessung unter Klimabedingungen, sowie der sog. "humid aged compression set" (HACS), eine Druckverformungsrestmessung nach Feucht-Wärme-Belastung, sind bei HR-Schaumstoffen häufig zu hoch. Vor allem der WCS ist für HR-Schaumstoffe in Anwendungen als Matratzen und Polstermaterial ein wichtiges Qualitätskriterium. Neben dem Druckverformungsrest sollten sich auch die Härte sowie Zugfestigkeit und Dehnung unter der Einwirkung von Wärme und Feuchtigkeit nicht verschlechtern.

Aus dem Stand der Technik sind eine Reihe von Möglichkeiten bekannt, den WCS von HR-Schaumstoffen zu verbessern. Eine Möglichkeit ist die Temperaturbehandlung der Schaumstoffe nach ihrer Fertigstellung. Dieses sogenannte "post curing" bei 120 °C wird z.B. von Brasington und Lambach (Handbook of the 35 th Annual Polyurethane Technical/Marketing Conference, 1994, Seite 261-266) sowie von Skorpenske et. al. (Handbook of the 34 th Annual Polyurethane Technical/Marketing Conference, 1992, Seite 650-658) und Broos et.al. (Journal of Cellular Plastics, 2000, 36, 5) beschrieben. Nachteilig an diesem Verfahren ist, daß der Schaumstoff nach der Herstellung einem weiteren Verarbeitungschritt unterzogen werden muß, bei dem es durch die Hitzeeinwirkung zu einer Beeinträchtigung der mechanischen Eigenschaften wie der Zugfestigkeit und der Dehnung kommen kann.

Gemäß EP-A-0903 362 werden niedermolekulare Kettenverlängerungsmittel bzw. Vernetzungsmittel zur Herstellung von Polyurethanschaumstoffen mit verbesserter Härte und erhöhter Feucht-Wärmebeständigkeit eingesetzt, beispielsweise Glycerin, Trimethylolpropan, Sorbit oder ethylenoxidreiche Addukte dieser Verbindungen. Aufgrund ihrer hohen OH-Zahlen von 400 - 700 mgKOH/g sind diese Verbindungen zu reaktiv für die Verwendung in HR-Blockschaumstoffen, da die übrigen zur Herstellung dieser Schaumstoffe verwendeten Polyole bereits eine sehr hohe Reaktivität aufweisen, so daß bei der Verwendung der beanspruchten niedermolekularen Vernetzer geschlossene und zum Schrumpf neigende Schaumstoffe resultieren.

In EP A-731 120 wird ein Verfahren zur Herstellung von hochelastischen Schaumstoffen unter Verwendung füllstofffreier Polyole beansprucht. Als füllstofffreie Polyole werden ein Gemisch aus einem höherfunktionellen Polyol mit einem Ethylenoxidgehalt von 10 - 30 Gew.-% und einem hochreaktiven Polyol mit überwiegend primären OH-Gruppen und einem Ethylenoxidgehalt von 50 - 95 % verwendet. Nachteilig bei dieser Art der Mischung ist, bedingt durch die hohe Reaktivität und die hohe Funktionalität der Polyole und damit den hohen Vernetzungsgrad des Schaumstoffes, die sehr geringe Bruchdehnung. Der hohe Gehalt an Ethylenoxid in dem hochreaktiven Polyol führt weiterhin zu einer hohen Hydrophilie der Schaumstoffe, was deren Alterungsbeständigkeit negativ beeinflusst.

In EP-A-884 338 wird ein Verfahren zur Herstellung von elastischen Schaumstoffen mit latexähnlichen Eigenschaften, geringerer Druckverformung und besserer Feuchtalterungsbeständigkeit unter Verwendung einer Kombination aus höherfunktionellen Polyetherpolyolen mit einer Funktionalität von 4 bis 8 und Polymerpolyolen beschrieben. Die höherfunktionellen Polyole werden hergestellt durch Addition von Alkylenoxiden an höherfunktionelle Starter wie Sorbit, Mannit, oder Sucrose allein oder in Kombination mit Startern wie Ethylenglykol, Propylenglykol, Glycerin, Trimethylolpropan oder Pentaerythrit. Durch den Einsatz dieser Polyolkomponente sollte der Füllstoffgehalt im Polymerpolyol verringert werden, ohne daß es zu einer Verringerung der Härte des Schaumstoffs kommt. Durch die Verwendung des höherfunktionellen Polyols in Kombination mit dem Polymerpolyol, wird insgesamt eine sehr hohe Vernetzungsdichte erzielt, was zu schlechter Zugleistung, insbesondere verringerter Bruchdehnung der Schaumstoffe führt.

In DE 19736976 wird ein Verfahren zur Herstellung von Schaumstoffen mit verbesserten Eigenschaften, insbesondere mit geringerer Druckverformung sowie höherer Härte und Zugfestigkeit, unter Zusatz von höherfunktionellen Polyetherpolyolen und Glyzerin als Vernetzerkomponente beschrieben. Die höherfunktionellen Polyole werden hergestellt durch Addition von Alkylenoxiden an ein Gemisch aus höherfunktionellen Startern wie Sorbit oder Saccharose und hydroxyfunktionellen Alykylenglykolen, enthaltend 2 bis 3 aktive Wasserstoffatome. Die in den Beispielen angegebenen Schaumstoffe weisen verglichen zu einem Schaumstoff ohne höherfunktionelles Polyol keinen signifikant reduzierten und zudem auf hohem Niveau liegenden Druckverformungsrest auf. Die Verwendung von Glyzerin als Vernetzerkomponente sowie der hohe Gehalt des hochfunktionellen Polyetheralkohols bedingen eine sehr hohe Vernetzungsdichte der beschriebenen Schaumstoffe. Bei der Verwendung von Glyzerin bei der Herstellung von HR-Schaumstoffen, insbesondere HR-Blockschaumstoffen, kommt es zu verfahrenstechnischen Problemen.

In US 5718856 werden Mischungen aus höherfunktionellen Polyolen mit einer nominellen Funktionalität von mindestens 6 und höherfunktionellen Polymerpolyolen mit einer nominellen Funktionalität von mindestens 5,5 zur Verminderung des wet compression sets in HR-Formschaumstoffen beansprucht. Die Herstellung von Polyolen mit derart hohen Funktionalitäten ist technologisch schwierig, nur über Vorpolymerisate möglich und daher kostenaufwendig. Derartige Polyole weisen in der Regel aufgrund ihrer hohen Funktionalität eine hohe Viskosität auf und sind aus diesem Grund schlecht zu verarbeiten.

WO 95/15990 beschreibt die Verwendung einer Polyolkomponente aus einem sehr hohen Anteil an hochfunktionellen, insbesondere sechsfunktionellen Polyolen und einem sehr geringen Anteil eines Polyols mit einem Gehalt an Ethylenoxid von mindestens 30 Gew.-% für hochelastische Schaumstoffe. Als Vorteil dieser Polyolzusammensetzung wurde die Möglichkeit der Verwendung hoher Gehalte an Alkanolamin in der Schaumzusammensetzung genannt, was zu besseren Flammschutzeigenschaften der Schäume führen soll. Dabei werden bis zu 5 Gew.-% an Diethanolamin als Vernetzer eingesetzt. Der Einsatz so hoher Mengen an Alkanolamin ist jedoch mit den beschriebenen Nachteilen verbunden.

Aufgabe der vorliegenden Erfindung war es, hochelastische Polyurethanschaumstoffe, insbesondere hochelastische Polyurethanblockweichschaumstoffe, mit verbesserter Alterungsbeständigkeit gegen Wärme und Feuchtigkeit, insbesondere verbessertem wet compression set (WCS) und humid aged compression set (HACS), und ausreichender Härte herzustellen. Dabei sollen möglichst geringe Mengen an Alkanolaminvernetzer eingesetzt werden.

Es wurde nun überraschenderweise gefunden, dass sich der Gehalt an Alkanolamin in den Schaumformulierungen deutlich reduzieren lässt, ohne daß es zu einer Beeinträchtigung der Eigenschaften der Schaumstoffe kommt, wenn zur Herstellung von hochelastischen Schaumstoffen eine Mischung aus Polymerpolyolen, höherfunktionellen hochmolekularen Polyolen und niederfunktionellen hochmolekularen Polyolen eingesetzt wird.

Gegenstand der Erfindung ist ein Verfahren zur Herstellung von hochelastischen Polyurethanschaumstoffen durch Umsetzung von

a) Polyisocyanaten mit

b) Verbindungen mit mindestens zwei mit Isocyanatgruppen reaktiven Wasserstoffatomen,

dadurch gekennzeichnet, daß als Verbindungen mit zwei mit Isocyanatgruppen reaktiven Wasserstoffatomen b) eine Mischung, enthaltend, jeweils bezogen auf das Gewicht der Mischung,

b1) 5 bis 75 Gew.-% mindestens eines Polymerpolyols

b2) 25 bis 95 Gew.-% einer Mischung, enthaltend, jeweils bezogen auf das Gewicht der Mischung b2),

b2i) 70 bis 98 Gew.-% mindestens eines Polyetheralkohols mit einem Molekulargewicht im Bereich von 3500 bis 6500 g/mol, mit einer Funktionalität kleiner oder gleich 3, vorzugsweise 2 bis 3, mit einem Gehalt an Ethylenoxid im Bereich zwischen 8 und 20 Gew.-%, bezogen auf das Gewicht des Polyetheralkohols, und

b2ii) 2 bis 30 Gew.-% mindestens eines Polyetheralkohols mit einem Molekulargewicht größer 4000 g/mol bis 7000 g/mol, einer Funktionalität zwischen 4 und 8 und einem Gehalt an Ethylenoxid im Bereich zwischen 5 und 15 Gew.-%, bezogen auf das Gewicht des Polyetheralkohols,

eingesetzt wird.

Vorzugsweise enthält die Reaktionsmischung auch Alkanolamine als Vernetzer. Diese werden in einer Menge von 0,2 bis 2,0 Gew.-%, vorzugsweise 0,2 bis 1,0 Gew.-%, jeweils bezogen auf das Gewicht der Komponente b), eingesetzt. Als Alkanolamine seien beispielhaft genannt Diethanolamin, Diisopropanolamin, 3-(2-Hydroxyethylamino)-1-propanol, N-(2-aminoethyl)-ethanolamin, Triisopropanolamin, Triethanolamin,. Neben Alkanolaminen können auch Glycerin und Trimethylolpropan und/oder mehrfunktionelle Amine wie Diethylentriamin, (3-(2-Aminoethyl)aminopropylamin) und/oder Dipropylentriamin in einer Menge von 0,2 bis 3,0 Gew.-% bezogen auf das Gewicht der Komponente b) als Vernetzer eingesetzt werden.

Die Polymerpolyole sind vorzugsweise ausgewählt aus der Gruppe, enthaltend

b1i) Dispersionen von Homo- und/oder Copolymeren von Styrol und Acrylnitril in Polyolen (SAN-Polyole), hergestellt durch in situ-Copolymersiation von Acrylnitril und/oder Styrol in Carrierpolyolen vom Typ b2i), mit einem Feststoffgehalt im Bereich zwischen 35 und 55 Gew.-% und einer OH-Zahl im Bereich zwischen 15 und 25 mg KOH/g.

b1ii) Dispersionen von Polyharnstoffteilchen in Polyolen, wobei die Polyharnstoffteilchen durch Umsetzung von Diaminen und Diisocyanaten in den Polyolen erfolgt (PHD-Polyole),wie sie beispielsweise in DE 2519004, DE

4

2513815 und DE 4007063 beschrieben sind.

b1iii) Dispersionen von Teilchen, die durch Umsetzung von Alkanolaminen mit Diisocyanaten in Polyolen hergestellt werden (PIPA-Polyole).

Diese Produkte sind allgemein bekannt und handelsüblich.

Bei den Polyetheralkoholen b2i) handelt es sich vorzugsweise, wie ausgeführt, um reaktive Polyetheralkohole mit einem Molekulargewicht zwischen 3500 und 6500 g/mol, bevorzugt 4000 und 6000 g/mol, hergestellt durch Addition von Alkylenoxiden an 2- oder 3-funktionelle Startsubstanzen wie Glyzerin oder Trimethylolpropan, wobei das Ethylenoxid vorzugsweise am Kettenende angelagert wird.

Die Polyetheralkohole b2ii) haben, wie ausgeführt, ein Molekulargewicht von 4000 g/mol bis 7000 g/mol, eine Funktionalität von 4 bis 8, primäre OH-Gruppen, einen Ethylenoxidgehalt von 5 bis 15 Gew.-%, bevorzugt ≤ 9 Gew.-%, wobei vorzugsweise zumindest ein Teil des verwendeten Ethylenoxids am Kettenende angelagert wird. Aufgrund der dadurch gebildeten primären OH-Gruppen sind diese Polyetheralkohole besonders zur Herstellung von HR-Schaumstoffen geeignet. Signifikante Beeinträchtigungen der Eigenschaften der Schaumstoffe, wie dies häufig bei der Verwendung von niedermolekularen Vernetzungsmitteln beobachtet werden, treten bei der Verwendung dieser Polyetheralkohole nicht auf.

Als Startermoleküle zur Herstellung der Polyetheralkohole b2ii) werden Verbindungen mit mindestens 4 aktiven Wasserstoffatomen, beispielsweise Sorbit, Mannit, Saccharose, Xylit, Maltit, Maltose, Lactose und Fructose, bevorzugt Sorbit und Saccharose eingesetzt. Diese Verbindungen können als Startmoleküle allein oder in Mischung mit Verbindungen mit einer Funktionalität < 4, wie beispielsweise Ethylenglykol, Propylenglykol, Glycerin, Trimethylolpropan oder Pentaerythrit mit Alkylenoxiden, zumeist Propylenoxid und/oder Ethylenoxid, zur Reaktion gebracht werden. Dabei ist die Menge der Verbindungen mit einer Funktionalität ≤ 4 so zu bemessen, daß die durchschnittliche Funktionalität der resultierenden Polyetheralkohole mindestens 4 beträgt.

In einer besonders vorteilhaften Ausführungsform der Polyetheralkohole b2ii) werden die Verbindungen mit mindestens 4 aktiven Wasserstoffatomen gemeinsam mit aliphatischen, araliphatischen und/oder aromatischen Aminen mit mindestens zwei reaktiven Wasserstoffatomen mit den Alkylenoxiden umgesetzt. Vorzugsweise werden aliphatische Amine mit 2 bis 8, vorzugsweise 2 bis 5 Kohlenstoffatomen und 1 bis 2, vorzugsweise 2 primären Aminogruppen, eingesetzt. Bevorzugte Amine sind Ethylendiamin und Propylendiamin.

Die Verwendung von primäre und/oder sekundäre Amine enthaltenden Startergemischen zur Herstellung der Polyetheralkohole b2ii) hat Vorteile. So lassen sich durch die Verwendung von derartigen Startergemischen Polyole mit katalytischer Aktivität herstellen, da durch die Umsetzung des primären und sekundären Amins mit Alkylenoxiden sekundäre und/oder tertiäre Aminogruppen im Polyolmolekül erzeugt werden. Diese sekundären und/oder tertiären Aminogruppen dienen als katalytisch aktive Zentren, so daß die resultierenden Polyole zur Aktivierung der Polyisocyanat-Polyadditionsreaktion befähigt sind. Durch diese zusätzliche katalytische Wirkung der eingesetzten Polyole wird es möglich, den Anteil der üblicherweise verwendeten flüchtigen Aktivatoren, wie beispielsweise Triethylendiamin oder Dimethylaminoethylether, die zur Herstellung von Polyurethanschaumstoffen verwendet werden, zu reduzieren. Dies ist von großer Bedeutung, um insbesondere den immer höher werdenden Anforderungen an geringen Mengen an flüchtigen Bestandteilen in Polyurethanschaumstoffen zu genügen.

Die Polyetheralkohole b2ii) führen zu einer Erhöhung des Vernetzungsgrades und damit der Härte des Schaumstoffes. Es wurde festgestellt, dass die Verwendung der Polyetheralkohole b2ii) zu einer signifikanten Verbesserung der Beständigkeit der Schaumstoffe gegen Feuchtigkeit und Wärme, insbesondere zu einen signifikanten Verbesserung des wet compression set und des sog. "humid aged compression set" (HACS), dem Druckverformungsrest nach Feuchtwärmelagerung führt.

Durch die Verwendung der höherfunktionellen Polyetheralkohole b2ii) kann der Anteil an Alkanolaminvernetzer deutlich, vorzugsweise auf einen Gehalt unter 1,5 Gew.-%, insbesondere auf einen Gehalt von 0,2 bis 1,0 Gew.-%, jeweils bezogen auf das Gewicht der Komponente b), gesenkt werden, ohne dass dies zu einer Verschlechterung der Stabilität der Schaumstoffe, führt, die sich beispielsweise in einem starken Absetzen der Schaumstoffe bis hin zum Kollaps, zeigen kann. Die Senkung des Anteils an Alkanolaminvernetzer ist, wie oben beschrieben, wünschenswert. So führen Alkanolaminvernetzer durch ihren Einbau zur Störung der Ordnung der Hartsegmente, was mit den bereits beschriebenen Nachteilen, insbesondere einer signifikanten Erhöhung des wet compression set verbunden ist. Zudem werden Bindungsspaltungen durch Alkanolamine verstärkt, da diese nach ihrem Einbau in die Hartsegmente katalytisch aktive tertiäre N-Zentren aufweisen. Diese Bindungsbrüche durch hydrolytische Spaltung sind maßgeblich für den Abfall der mechanischen Eigenschaften verantwortlich.

Zu den weiteren für das erfindungsgemäße Verfahren eingesetzten Ausgangsverbindungen ist im einzelnen folgendes zu sagen:

Als Polyisocyanate a) kommen für das erfindungsgemäße Verfahren alle Isocyanate mit zwei oder mehr Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), vorzugsweise TDI und MDI, besonders bevorzugt TDI, verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate. Bevorzugte Prepolymere sind MDI-Prepolymere mit einem NCO-Gehalt zwischen 20 und 35 % bzw. deren Mischungen mit Polymethylenpolyphenylenpolyisocyanaten (Roh-MDI).

Das erfindungsgemäße Verfahren erfolgt zumeist in Anwesenheit von Katalysatoren, beispielsweise tertiären Aminen oder organischen Metallverbindungen, insbesondere Zinnverbindungen. Als Zinnkatalysatoren werden bevorzugt zweiwertige Zinnsalze von Fettsäuren wie Zinndioktoat und zinnorganische Verbindungen wie Dibutylzinndilaurat verwendet.

Die Umsetzung erfolgt gegebenenfalls in Anwesenheit von Hilfsund/oder Zusatzstoffen, wie Füllstoffen, Zellreglern, oberflächenaktiven Verbindungen und/oder Flammschutzmitteln. Bevorzugte Flammschutzmittel sind flüssige Flammschutzmittel auf Halogen-Phosphor-Basis wie Trichlorpropylphosphat, Trichlorethylphosphat.

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Zur Herstellung der erfindungsgemäßen Polyurethane werden die organischen Poly-isocyanate mit den Verbindungen mit mindestens zwei aktiven Wasserstoffatomen im Beisein der genannten Treibmittel, Katalysatoren und Hilfs- und/oder Zusatzstoffe zur Reaktion gebracht.

Bei der Herstellung der erfindungsgemäßen Polyurethane werden das Isocyanat und die Polyolkomponente zumeist in einer solchen Menge zusammengebracht, daß das Äquivalenzverhältnis von Isocyanatgruppen zur Summe der aktiven Wasserstoffatome 0,7 bis 1:1,25, vorzugsweise 0,8 bis 1,2 beträgt.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt wird. Die Komponenten werden vorzugsweise bei einer Temperatur im Bereich zwischen 15 bis 90 °C, vorzugsweise 20 bis 60 °C und besonders bevorzugt 20 bis 35 °C vermischt und in das Formwerkzeug beziehungsweise auf die Bandstraße gebracht. Die Temperatur im Formwerkzeug liegt zumeist im Bereich zwischen 20 und 110 °C, vorzugsweise 30 bis 60 °C und besonders bevorzugt 35 bis 55 °C.

Die nach dem erfindungsgemäßen Verfahren hergestellten hochelastischen Polyurethanschaumstoffe zeichnen sich durch gute Härteeigenschaften und eine hohe Beständigkeit gegen Feuchtigkeit und Wärme aus. Besonders vorteilhaft sind die geringeren HACS- und WCS-Werte der nach dem erfindungsgemäßen Verfahren hergestellten Schaumstoffe. Der wet compression set nach DIN EN ISO 1856, Verfahren C, weist zumeist einen Wert < 20 %, bevorzugt < 15 % auf. Der HACS-Wert nach DIN EN ISO 1856, Verfahren A, ist zumeist kleiner als 15 %, bevorzugt kleiner als 10 %.

Die Erfindung soll an den nachfolgenden Beispielen näher erläutert werden.

Beispiele 1 bis 21

Beschreibung der eingesetzten Polyetherpolyole

Polymer-Polyole b1):

Lupranol® 4300 (BASF AG): : SAN-Polymerpolyol, hergestellt durch in-situ-Polymerisation von Styrol und Acrylnitril im Verhältnis 1:1 in einem Carrierpolyol vom Typ b2i) (Pluracol® 538) mit einem SAN-Gehalt von 50 % und einer OH-Zahl von 17,5 mg KOH/g.

Lupranol® 4800 (BASF AG): SAN-Polymerpolyol, hergestellt durch in-situ-Polymerisation von Styrol und Acrylnitril im Verhältnis 1:2 in einem Carrierpolyol vom Typ b2i) (Lupranol® 2095) mit einem SAN-Gehalt von 45 % und einer OH-Zahl von 20,0 mg KOH/g.

Polyole b2i):

Lupranol® 2095 (BASF AG): Polyetherpolyol der OH-Zahl 35 mgKOH/g, hergestellt durch Addition von Propylenoxid und Ethylenoxid an Glycerin als Startmolekül mit einem Gehalt an 13,3 Gew.-% Ethylenoxid als EO-Endblock und einer nominellen Funktionalität von 2,72.

Polyole b2ii):

b2ii)1: Polyetherpolyol der OH-Zahl 42 mgKOH/g, hergestellt durch Addition von Propylenoxid und Ethylenoxid an Sorbitol als Startmolekül mit einem Gehalt an 10 Gew.-% Ethylenoxid als EO-Endblock und einer nominellen Funktionalität von 4,3.

b2ii)2: Polyetherpolyol der OH-Zahl 38 mgKOH/g, hergestellt durch Addition von Propylenoxid und Ethylenoxid an ein Gemisch aus Ethylendiamin und Sorbitol als Startmoleküle mit einem Gehalt an 9 Gew.-% Ethylenoxid als EO-Endblock und einer nominellen Funktionalität von 4,5.

b2ii)3: Polyetherpolyol der OH-Zahl 36 mgKOH/g, hergestellt durch Addition von Propylenoxid und Ethylenoxid an ein Gemisch aus Ethylendiamin und Sorbitol als Startmoleküle mit einem Gehalt an 15 Gew.-% Ethylenoxid als EO-Endblock und einer nominellen Funktionalität von 4,5.

b2ii)4: Polyetherpolyol der OH-Zahl 37 mgKOH/g, hergestellt durch Addition von Propylenoxid und Ethylenoxid an ein Gemisch aus Ethylendiamin und Sorbitol als Startmoleküle mit einem Gehalt an 9 Gew.-% Ethylenoxid als EO-Endblock und einer nominellen Funktionalität von 5,2.

b2ii)5: Polyetherpolyol der OH-Zahl 37 mgKOH/g, hergestellt durch Addition von Propylenoxid und Ethylenoxid an ein Gemisch aus Ethylendiamin und Sorbitol als Startmoleküle mit einem Gehalt an 15 Gew.-% Ethylenoxid als EO-Endblock und einer nominellen Funktionalität von 5,2.

b2ii)6: Polyetherpolyol der OH-Zahl 34 mgKOH/g, hergestellt durch Addition von Propylenoxid und Ethylenoxid an Sorbitol als Startmolekül mit einem Gehalt an 9 Gew.-% Ethylenoxid als EO-Endblock und einer nominellen Funktionalität von 6,0.

b2ii)7: Polyetherpolyol der OH-Zahl 38 mgKOH/g, hergestellt durch Addition von Propylenoxid und Ethylenoxid an ein Gemisch aus Ethylendiamin und Saccharose als Startmoleküle mit einem Gehalt an 9 Gew.-% Ethylenoxid als EO-Endblock und einer nominellen Funktionalität von 6,0.

b2ii)8: Polyetherpolyol der OH-Zahl 33 mgKOH/g, hergestellt durch Addition von Propylenoxid und Ethylenoxid an ein Gemisch aus Ethylendiamin und Saccharose als Startmoleküle mit einem Gehalt an 15 Gew.-% Ethylenoxid als EO-Endblock und einer nominellen Funktionalität von 6,0.

Unter den üblichen Bedingungen der Schaumstoffherstellung nach dem "one-shot"-Verfahren werden folgende Verbindungen miteinander zur Reaktion gebracht:

Tabelle 1

| Beispiel | 1(V) | 2 | 3 | 4 | 5 | 6 | 7 | 8 | 9 |
|---|---|---|---|---|---|---|---|---|---|
| Lupranol 4800 | 35,00 | 35 | 35 | 35 | 35 | 35 | 35 | 35 | 35 |
| Lupranol 2095 | 65,00 | 55 | 55 | 55 | 55 | 55 | 55 | 55 | 55 |
| Polyol b2ii)1 | | 10 | | | | | | | |
| Polyol b2ii)2 | | | 10 | | | | | | |
| Polyol b2ii)3 | | | | 10 | | | | | |
| Polyol b2ii)4 | | | | | 10 | | | | |
| Polyol b2ii)5 | | | | | | 10 | | | |
| Polyol b2ii)6 | | | | | | | 10 | | |
| Polyol b2ii)7 | | | | | | | | 10 | |
| Polyol b2ii)8 | | | | | | | | | 10 |

Tabelle 1   (fortgesetzt)

| Beispiel | 1(V) | 2 | 3 | 4 | 5 | 6 | 7 | 8 | 9 |
|---|---|---|---|---|---|---|---|---|---|
| DEOA 85 % | 1,40 | 0,80 | 0,80 | 0,80 | 0,80 | 0,80 | 0,80 | 0,80 | 0,80 |
| Wasser | 2,10 | 2,18 | 2,18 | 2,18 | 2,18 | 2,18 | 2,18 | 2,18 | 2,18 |
| Tegostab B 8681 LF (Goldschmidt) | 0,80 | 0,80 | 0,80 | 0,80 | 0,80 | 0,80 | 0,80 | 0,80 | 0,80 |
| Lupragen N 201 (BASF AG) | 0,12 | 0,12 | 0,12 | 0,12 | 0,12 | 0,12 | 0,12 | 0,12 | 0,12 |
| Lupragen N 206 (BASF AG) | 0,04 | 0,04 | 0,04 | 0,04 | 0,04 | 0,04 | 0,04 | 0,04 | 0,04 |
| Dibutylzinndilaurat | 0,10 | 0,10 | 0,10 | 0,10 | 0,10 | 0,10 | 0,10 | 0,10 | 0,10 |
| Trichlorpropylphosphit | 1,50 | 1,50 | 1,50 | 1,50 | 1,50 | 1,50 | 1,50 | 1,50 | 1,50 |
| Lupranat T80 (BASF AG)-Index | 110 | 110 | 110 | 110 | 110 | 110 | 110 | 110 | 110 |
|  |  |  |  |  |  |  |  |  |  |
| Raumgewicht [kg/m$^3$] | 38,9 | 38,7 | 39,6 | 40 | 38,4 | 38,6 | 38,5 | 38,8 | 39,1 |
| Zugfestigkeit [kPa] | 121 | 115 | 115 | 106 | 117 | 117 | 108 | 118 | 119 |
| Dehnung [%] | 131 | 124 | 124 | 111 | 125 | 129 | 119 | 125 | 123 |
| Stauchhärte 40 % [kPa] | 4,1 | 4,3 | 4,7 | 4,6 | 4,4 | 4,4 | 4,4 | 4,3 | 4,3 |
| DVR [%] | 3,9 | 3,5 | 3,3 | 3,6 | 2,8 | 2,2 | 3,7 | 3,6 | 3,1 |
| RPE [%] | 63 | 60 | 57 | 54 | 57 | 57 | 59 | 61 | 60 |
| Eindruckhärte 25 % | 165 | 175 | 189 | 193 | 183 | 178 | 184 | 182 | 184 |
| Eindruckhärte 40 % | 228 | 233 | 254 | 259 | 245 | 241 | 245 | 241 | 245 |
| Eindruckhärte 65 % | 423 | 418 | 466 | 481 | 449 | 442 | 450 | 429 | 439 |
| SAG-Faktor | 2,56 | 2,39 | 2,47 | 2,49 | 2,45 | 2,48 | 2,45 | 2,36 | 2,39 |
| HACS [%] | 8,5 | 4,1 | 6,3 | 4,7 | 4,8 | 4,8 | 5,4 | 3,9 | 4,2 |
| WCS [%] | 13,5 | 7,2 | 6,9 | 6,8 | 8,2 | 8,4 | 8,4 | 8,4 | 7,2 |

Die Mengen der Einsatzstoffe sind Gewichtsteile.

V - Vergleichsversuch

Lupranat® T80 - Toluylendiisocyanat 80:20 der BASF AG

Bestimmung des WCS: (wet compression set): Ein Schaumprobekörper wird 22 Stunden bei 50 °C, 95 % relativer Luftfeuchtigkeit und 70 % Stauchung im gestauchten Zustand gelagert nach DIN EN ISO 1856, Verfahren C.

HACS: (humid aged compression set): Lagerung eines Schaumprobekörpers bei 120 °C und 100 % relativer Luftfeuchtigkeit., 5 Stunden nach DIN EN ISO 2440. Danach Druckverformungsrestmessung über einen Zeitraum von 22 Stunden bei 70 °C und 50 % Stauchung nach DIN EN ISO 1856, Verfahren A.

SAG-Faktor:

$$SAG\text{-}Faktor = ILD\ 65\ \% \ / \ ILD\ 25\ \%$$

(Quotient aus der Eindruckhärte bei 65 % Verformung geteilt durch die Eindruckhärte bei 25 % Verformung)

Lupragen® N 206: 70 %-ige Lösung von Bis(dimethylaminoethyl)ether in Dipropylenglykol

Lupragen® N 201: 33 %-ige Lösung von Triethylendiamin in Dipropylenglykol

Tegostab® B 8681 : Stabilisator und Zellregulator für hochelastische Schaumstoffe auf Silikonbasis

Wie Tabelle 1 zeigt, bewirkt die Verwendung der erfindungsgemäßen Polyolkombination (Beispiele 2 bis 9) eine deutliche Senkung des wet compression set und des HACS sowie des normalen Druckverformungsrestes. Aus der Tabelle 1 geht des weiteren hervor, dass bei Verwendung der erfindungsgemäßen Polyolkombination der Anteil an Diethanolamin deutlich gesenkt werden kann, ohne dass es zu einer signifikanten Änderung der mechanischen Eigenschaften kommt. Auffällig ist insbesondere, dass sich die Härten durch die Reduktion des Diethanolamins deutlich erhöhen lassen. Die Abhängigkeit der Härten von dem Anteil an Alkanolaminvernetzer ist nochmals deutlicher in Tab.

3 dargestellt. Der durch die Reduzierung des Diethanolamins hervorgerufene Stabilitätsverlust kann überraschenderweise durch den Austausch gegen höherfuktionelle Polyole (i) 1-8 ausgeglichen werden, ohne dass dies zu einer nennenswerten Verschlechterung der Zugfestigkeit und Dehnung führt.

Tabelle 2

| Beispiel | 10 (V) | 11 | 12 | 13 | 14 | 15 | 16 | 17 |
|---|---|---|---|---|---|---|---|---|
| Lupranol® 4300 | 35,00 | 35 | 35 | 35 | 35 | 35 | 35 | 35 |
| Lupranol® 2095 | 65,00 | 55 | 55 | 55 | 55 | 55 | 55 | 55 |
| Polyol b1ii1 | | | | | | | | |
| Polyol b2ii2 | | 10 | | | | | | |
| Polyol b2ii3 | | | 10 | | | | | |
| Polyol b2ii4 | | | | 10 | | | | |
| Polyol bsii5 | | | | | 10 | | | |
| Polyol b2ii6 | | | | | | 10 | | |
| Polyol b2ii7 | | | | | | | 10 | |
| Polyol b2ii8 | | | | | | | | 10 |
| DEOA 85 % | 1,50 | 0,80 | 0,80 | 0,80 | 0,80 | 0,80 | 0,80 | 0,80 |
| Wasser | 2,00 | 2,31 | 2,31 | 2,31 | 2,31 | 2,31 | 2,31 | 2,31 |
| Tegostab® B 8681 LF (Goldschmidt) | 0,80 | 0,80 | 0,80 | 0,80 | 0,80 | 0,80 | 0,80 | 0,80 |
| Lupragen® N 201 (BASF AG) | 0,12 | 0,12 | 0,12 | 0,12 | 0,12 | 0,12 | 0,12 | 0,12 |
| Lupragen® N 206 (BASF AG) | 0,04 | 0,04 | 0,04 | 0,04 | 0,04 | 0,04 | 0,04 | 0,04 |
| Dibutylzinndilaurat | 0,10 | 0,10 | 0,10 | 0,10 | 0,10 | 0,10 | 0,10 | 0,10 |
| Trichlorpropyl-phosphit | 1,50 | 1,50 | 1,50 | 1,50 | 1,50 | 1,50 | 1,50 | 1,50 |
| Lupranat® T80 (BASF AG)-Index | 115 | 115 | 115 | 115 | 115 | 115 | 115 | 115 |
| | | | | | | | | |
| Raumgewicht [kg/m$^3$] | 37,3 | 35,8 | 36 | 38 | 36,2 | 36,7 | 35 | 34,8 |
| Zugfestigkeit [kPa] | 112 | 107 | 108 | 129 | 127 | 131 | 106 | 98 |
| Dehnung [%] | 125 | 118 | 108 | 131 | 122 | 129 | 111 | 105 |
| Stauchhärte 40 % [kPa] | 4,1 | 4,8 | 5 | 5 | 4,6 | 4,9 | 4,9 | 4,7 |
| DVR [%] | 3,2 | 3,1 | 4,5 | 4,2 | 3,6 | 3,7 | 3,4 | 4,4 |
| RPE [%] | 54 | 49 | 47 | 56 | 56 | 56 | 49 | 50 |
| Eindruckhärte 25 % | 163 | 186 | 192 | 183 | 191 | 197 | 187 | 181 |
| Eindruckhärte 40 % | 220 | 256 | 265 | 251 | 262 | 265 | 258 | 250 |
| Eindruckhärte 65 % | 401 | 481 | 499 | 454 | 481 | 480 | 485 | 469 |
| SAG-Faktor | 2,46 | 2,58 | 2,6 | 2,48 | 2,52 | 2,43 | 2,59 | 2,59 |
| HACS [%] | 16,2 | 8 | 11 | 7,2 | 7,7 | 8,1 | 10,7 | 9,9 |
| Wet set [%] | 28,6 | 11,2 | 12 | 11,8 | 12,1 | 9,7 | 12,9 | 12,9 |

Wie Tabelle 2 zeigt, bewirkt die Verwendung der erfindungsgemäßen Polyolkombination 1-8 (Beispiele 11-17) eine deutliche Senkung des wet compression set und des HACS. Aus der Tabelle 2 geht des weiteren hervor, dass der Anteil an Diethanolamin deutlich gesenkt werden kann. Der durch die Reduzierung des Diethanolamins hervorgerufene Stabilitätsverlust kann durch die Verwendung der erfindungsgemäßen Polyolkombination ausgeglichen werden, ohne dass dies zu einer nennenswerten Verschlechterung von Zugfestigkeit und Dehnung führt.

Tabelle 3

| Beispiel | 18 | 19 | 20 | 21 |
|---|---|---|---|---|
| Lupranol® 4300 | 35,00 | 35,00 | 35,00 | 35, 00 |
| Lupranol® 2095 | 55,00 | 55,00 | 55,00 | 55,00 |
| Polyol 2ii1 | 10,00 | 10,00 | 10,00 | 10,00 |
| DEOA 85 % | 1,40 | 1,00 | 0,60 | 0,40 |
| Wasser | 2,10 | 2,10 | 2,10 | 2,10 |
| Tegostab® B 8681 LF (Goldschmidt) | 0,80 | 0,80 | 0,80 | 0,80 |
| Lupragen® N 201 (BASF AG) | 0,12 | 0,12 | 0,12 | 0,12 |
| Lupragen® N 206 (BASF AG) | 0,04 | 0,04 | 0,04 | 0,04 |
| Dibutylzinndilaurat | 0,10 | 0,10 | 0,10 | 0,10 |
| Trichlorpropylphosphit | 1,50 | 1,50 | 1,50 | 1,50 |
| Lupranat® T80 (BASF AG)-Index | 110 | 110 | 110 | 110 |
| | | | | |
| Raumgewicht [kg/m$^3$] | 37,1 | 37,5 | 37,5 | 39,5 |
| Zugfestigkeit [kPa] | 113 | 121 | 116 | 135 |
| Dehnung [%] | 112 | 118 | 132 | 151 |
| Stauchhärte 40 % [kPa] | 4,2 | 4,7 | 4,7 | 5,3 |
| DVR [%] | 4,4 | 3,5 | 2,9 | 3,9 |
| RPE [%] | 54 | 50 | 49 | 49 |
| Wet set [%] | 33 | 27 | 9,5 | 9,6 |

Tab. 3 zeigt den Einfluss des Gehaltes an Diethanolamin auf die Stauchhärte der Schaumstoffe. Diese nimmt mit zunehmendem Gehalt an Diethanolamin bei konstantem Gehalt an Polyol b2ii1 deutlich ab. Diese Härteabnahme ist auf den Effekt des Diethanolamins zurückzuführen und kann durch die Zugabe an höheren Mengen an Polyol b2ii ausgeglichen werden. Des weiteren zeigt die Tabelle den positiven Effekt des Zusatzes von Polyol b2ii in Kombination mit reduzierten Anteilen an Alkanolamin.

**Patentansprüche**

1. Verfahren zur Herstellung von hochelastischen Polyurethanschaumstoffen durch Umsetzung von

   a) Polyisocyanaten mit

   b) Verbindungen mit mindestens zwei mit Isocyanatgruppen reaktiven Wasserstoffatomen,

   **dadurch gekennzeichnet, daß** als Verbindungen mit zwei mit Isocyanatgruppen reaktiven Wasserstoffatomen b) eine Mischung, enthaltend, jeweils bezogen auf das Gewicht der Mischung,

   b1) 5 bis 75 Gew.-% mindestens eines Polymerpolyols

   b2) 25 bis 95 Gew.-% einer Mischung, enthaltend, jeweils bezogen auf das Gewicht der Mischung b2)

   b2i) 70 bis 98 Gew.-% mindestens eines Polyetheralkohols . mit einem Molekulargewicht im Bereich von 3500 und 6500 g/mol, mit einer Funktionalität kleiner oder gleich 3 und mit einem Gehalt an Ethylenoxid im Bereich zwischen 8 und 20 Gew.-%, bezogen auf das Gewicht des Polyetheralkohols, und

b2ii) 2 bis 30 Gew.-% mindestens eines Polyetheralkohols mit einem Molekulargewicht größer 4000 bis 7000 g/mol, einer Funktionalität zwischen 4 und 8 und einem Gehalt an Ethylenoxid im Bereich zwischen 5 und 15 Gew.-%, bezogen auf das Gewicht des Polyetheralkohols,

eingesetzt wird.

2. Verfahren nach Anspruch 1, **dadurch gekennzeichnet, daß** die Reaktionsmischung Alkanolamine in einer Menge von 0,2 bis 2 Gew.-%, bezogen auf das Gewicht der Komponente b) enthält.

3. Verfahren nach einem der Ansprüche 1 und 2, **dadurch gekennzeichnet, daß** die Alkanolamine ausgewählt sind aus der Gruppe, enthaltend Diethanolamin, Diisopropanolamin, 3-(2-Hydroxyethylamino)-1-propanol, N-(2-aminoethyl)-ethanolamin, Triisopropanolamin, Triethanolamin.

4. Verfahren nach einem der Ansprüche 1 bis 3, **dadurch gekennzeichnet, daß** die Polymerpolyole b1) ausgewählt sind aus der Gruppe, enthaltend

b1i) Dispersionen von Homo- und/oder Copolymeren von Styrol und Acrylnitril in Polyolen,

b1ii) Dispersionen von Polyharnstoffteilchen in Polyolen, wobei die Polyharnstoffteilchen durch Umsetzung von Diaminen und Diisocyanaten in den Polyolen erfolgt,

b1iii) Dispersionen von Teilchen, die durch Umsetzung von Alkanolaminen mit Diisocyanaten in Polyolen hergestellt werden,

und
Mischungen aus mindestens zwei der genannten Polyole.

5. Verfahren nach einem der Ansprüche 1 bis 4, **dadurch gekennzeichnet, daß** die Polyetheralkohole b2ii) herstellbar sind durch Umsetzung von Verbindungen mit mindestens 4 aktiven Wasserstoffatomen mit Alkylenoxiden.

6. Verfahren nach einem der Ansprüche 1 bis 5, **dadurch gekennzeichnet, daß** die Polyetheralkohole b2ii) herstellbar sind durch Umsetzung von Mischungen aus Verbindungen mit mindestens 4 aktiven Wasserstoffatomen und Verbindungen mit weniger als 4 aktiven Wasserstoffatomen mit Alkylenoxiden.

7. Verfahren nach einem der Ansprüche 1 bis 5, **dadurch gekennzeichnet, daß** die Polyetheralkohole b2ii) herstellbar sind durch Umsetzung von Mischungen aus Verbindungen mit mindestens 4 aktiven Wasserstoffatomen und aliphatischen, araliphatischen und/oder aromatischen Aminen mit Alkylenoxiden.

8. Hochelastischen Polyurethanschaumstoffe, herstellbar durch Umsetzung von

a) Polyisocyanaten mit

b) Verbindungen mit mindestens zwei mit Isocyanatgruppen reaktiven Wasserstoffatomen,

**dadurch gekennzeichnet, daß** als Verbindungen mit zwei mit Isocyanatgruppen reaktiven Wasserstoffatomen b) eine Mischung, enthaltend, jeweils bezogen auf das Gewicht der Mischung,

b1) 5 bis 75 Gew.-% eines Polymerpolyols

b2) 25 bis 95 Gew.-% einer Mischung, enthaltend, jeweils bezogen auf das Gewicht der Mischung b2),

b2i) 70 bis 98 Gew.-% eines Polyetheralkohols mit einem Molekulargewicht im Bereich von 3500 und 6500 g/mol, mit einer Funktionalität kleiner oder gleich 3 und mit einem Gehalt an Ethylenoxid im Bereich zwischen 8 und 20 Gew.-%, bezogen auf das Gewicht des Polyetheralkohols, und

b2ii) 2 bis 30 Gew.-% eines Polyetheralkohols mit einem Molekulargewicht größer 4000 bis 7000 g/mol, einer Funktionalität zwischen 4 und 8 und einem Gehalt an Ethylenoxid im Bereich zwischen 5 und 15 Gew.-%, bezogen auf das Gewicht des Polyetheralkohols.

9. Hochelastische Polyurethanschaumstoffe mit einem Wert für die humid aged compression set nach DIN EN ISO 2440 und DIN EN ISO 1856, Verfahren A von kleiner 15 % und einem Wert für die wet compression set nach DIN EN ISO 1856, Verfahren C von kleiner 20 %, herstellbar nach einem der Ansprüche 1 bis 7.

**Claims**

1. A process for the preparation of highly resilient polyurethane foams by reacting

   a) polyisocyanates with

   b) compounds having at least two hydrogen atoms reactive with isocyanate groups,

   wherein a mixture containing, based in each case on the weight of the mixture,

   b1) from 5 to 75% by weight of at least one polymer polyol and

   b2) from 25 to 95% by weight of a mixture containing, based in each case on the weight of the mixture b2),

   b2i) from 70 to 98% by weight of at least one polyether alcohol having a molecular weight of from 3 500 to 6 500 g/mol, a functionality of less than or equal to 3 and an ethylene oxide content of from 8 to 20% by weight, based on the weight of the polyether alcohol, and

   b2ii) from 2 to 30% by weight of at least one polyether alcohol having a molecular weight of from greater than 4 000 to 7 000 g/mol, a functionality of from 4 to 8 and an ethylene oxide content of from 5 to 15% by weight, based on the weight of the polyether alcohol,

   is used as compounds b) having two hydrogen atoms reactive with isocyanate groups.

2. A process as claimed in claim 1, wherein the reaction mixture contains alkanolamines in an amount of from 0.2 to 2% by weight, based on the weight of the component b).

3. A process as claimed in either of claims 1 and 2, wherein the alkanolamines are selected from the group consisting of diethanolamine, diisopropanolamine, 3-(2-hydroxyethylamino)-1-propanol, N-(2-aminoethyl)ethanolamine, triisopropanolamine and triethanolamine.

4. A process as claimed in any of claims 1 to 3, wherein the polymer polyols b1) are selected from the group consisting of

   b1i) dispersions of homo- and/or copolymers of styrene and acrylonitrile in polyols,

   b1ii) dispersions of polyurea particles in polyols, the polyurea particles being produced by reacting diamines and diisocyanates in the polyols,

   b1iii) dispersions of particles which are prepared by reacting alkanolamines with diisocyanates in polyols,

   and
   mixtures of at least two of said polyols.

5. A process as claimed in any of claims 1 to 4, wherein the polyether alcohols b2ii) can be prepared by reacting compounds having at least 4 active hydrogen atoms with alkylene oxides.

6. A process as claimed in any of claims 1 to 5, wherein the polyether alcohols b2ii) can be prepared by reacting mixtures of compounds having at least 4 active hydrogen atoms and compounds having less than 4 active hydrogen atoms with alkylene oxides.

7. A process as claimed in any of claims 1 to 5, wherein the polyether alcohols b2ii) can be prepared by reacting mixtures of compounds having at least 4 active hydrogen atoms and aliphatic, araliphatic and/or aromatic amines with alkylene oxides.

8. A highly resilient polyurethane foam which can be prepared by reacting

  a) polyisocyanates with

  b) compounds having at least two hydrogen atoms reactive with isocyanate groups,

  wherein a mixture containing, based in each case on the weight of the mixture,

  b1) from 5 to 75% by weight of a polymer polyol and

  b2) from 25 to 95% by weight of a mixture containing, based in each case on the weight of the mixture b2),

  b2i) from 70 to 98% by weight of a polyether alcohol having a molecular weight of from 3 500 to 6 500 g/mol, a functionality of less than or equal to 3 and an ethylene oxide content of from 8 to 20% by weight, based on the weight of the polyether alcohol, and

  b2ii) from 2 to 30% by weight of a polyether alcohol having a molecular weight of from greater than 4 000 to 7 000 g/mol, a functionality of from 4 to 8 and an ethylene oxide content of from 5 to 15% by weight, based on the weight of the polyether alcohol,

  is used as compounds b) having two hydrogen atoms reactive with isocyanate groups.

9. A highly resilient polyurethane foam having a value for the humid aged compression set according to DIN EN ISO 2440 and DIN EN ISO 1856, Method A, of less than 15% and a value for the wet compression set according to DIN EN ISO 1856, Method C, of less than 20%, preparable as claimed in any of claims 1 to 7.


**Revendications**

1. Procédé de préparation de mousses polyuréthane hautement élastique par réaction de

  a) polyisocyanates avec
  b) des composés ayant au moins deux atomes d'hydrogène réactifs envers les groupes isocyanates,

  **caractérisé en ce qu'**en tant que composés b) ayant deux atomes d'hydrogène réactifs envers les groupes isocyanates, un mélange est mis en oeuvre, contenant, à chaque fois par rapport au poids du mélange,

  b1) 5 à 75% en poids d'au moins un polyol polymère
  b2) 25 à 95% en poids d'un mélange contenant, à chaque fois par rapport au poids du mélange b2)
  b2i) 70 à 98% en poids d'au moins un polyétheralcool ayant une masse moléculaire dans la plage de 3 500 et 6 500 g/mole, ayant une fonctionnalité inférieure ou égale à 3, et ayant une teneur en oxyde d'éthylène dans la plage comprise entre 8 et 20% en poids, par rapport au poids du polyétheralcool, et
  b2ii) 2 à 30% en poids d'au moins un polyétheralcool ayant une masse moléculaire supérieure à 4 000 jusqu'à 7 000 g/mole, une fonctionnalité comprise entre 4 et 8 et une teneur en oxyde d'éthylène dans la plage comprise entre 5 et 15% en poids, par rapport au poids du polyétheralcool.

2. Procédé selon la revendication 1, **caractérisé en ce que**, le mélange réactionnel contient des alcanolamines en une quantité de 0,2 à 2% en poids, par rapport au poids du composant b).

3. Procédé selon l'une quelconque des revendications 1 et 2, **caractérisé en ce que** les alcanolamines sont choisis dans le groupe contenant la diéthanolamine, la diisopropanolamine, le 3-(2-hydroxyéthylamino)-1-propanol, la N-(2-aminoéthyl)-éthanolamine, la triisopropanolamine, la triéthanolamine.

4. Procédé selon l'une quelconque des revendications 1 et 3, **caractérisé en ce que** les polyols polymères b1) sont choisis dans le groupe contenant

b1i) des dispersions de homo- et/ou co-polymères du styrène et de l'acrylonitrile dans des polyols,
b1ii) des dispersions de particules de polyurée dans des polyols, les particules de polyurée se réalisant par réaction de diamines et de diisocyanates dans les polyols,
b1iii) des dispersions de particules, qui sont préparées par réaction d'alcanolamines avec des diisocyanates dans des polyols,

et
des mélanges d'au moins deux des polyols cités.

5. Procédé selon l'une quelconque des revendications 1 à 4, **caractérisé en ce que** les polyétheralcools b2ii) peuvent être préparés par réaction de composés ayant au moins 4 atomes d'hydrogène actifs avec des oxydes d'alkylène.

6. Procédé selon l'une quelconque des revendications 1 à 5, **caractérisé en ce que** les polyétheralcools b2ii) peuvent être préparés par réaction de mélanges constitués de composés ayant au moins 4 atomes d'hydrogène actifs et de composés ayant moins de 4 atomes d'hydrogène actifs, avec des oxydes d'alkylène.

7. Procédé selon l'une quelconque des revendications 1 à 5, **caractérisé en ce que** les polyétheralcools b2ii) peuvent être préparés par réaction de mélanges constitués de composés ayant au moins 4 atomes d'hydrogène actifs, et d'amines aliphatiques, araliphatiques et/ou aromatiques, avec des oxydes d'alkylène.

8. Mousse de polyuréthane hautement élastique que l'on peut préparer par réaction de

a) polyisocyanates avec
b) des composés ayant au moins deux atomes d'hydrogène réactifs envers les groupes isocyanates,

**caractérisée en ce qu'**en tant que composés ayant deux atomes d'hydrogène b) réactifs envers les groupes isocyanates, un mélange est mis en oeuvre, contenant, à chaque fois par rapport au poids du mélange,

b1) 5 à 75% en poids d'au moins un polyol polymère
b2) 25 à 95% en poids d'un mélange contenant, à chaque fois par rapport au poids du mélange b2)
b2i) 70 à 98% en poids d'au moins un polyétheralcool ayant une masse moléculaire dans la plage de 3 500 et 6 500 g/mole, ayant une fonctionnalité inférieure ou égale à 3, et ayant une teneur en oxyde d'éthylène dans la plage comprise entre 8 et 20% en poids, par rapport au poids du polyétheralcool, et
b2ii) 2 à 30% en poids d'au moins un polyétheralcool ayant une masse moléculaire supérieure à ,4 000 jusqu'à 7 000 g/mole, une fonctionnalité comprise entre 4 et 8 et une teneur en oxyde d'éthylène dans la plage comprise entre 5 et 15% en poids, par rapport au poids du polyétheralcool.

9. Mousse de polyuréthane hautement élastique, ayant une valeur pour la déformation rémanente après compression et vieillissement à l'état humide (humid aged compression set) selon DIN EN ISO 2440 et DIN EN ISO 1856, procédé A, inférieure à 15% et une valeur pour la déformation rémanente après compression à l'état mouillé (wet compression set) selon DIN EN ISO 1856, procédé C, inférieure à 20%, que l'on peut préparer selon l'une quelconque des revendications 1 à 7.